# EUROPÄISCHE PATENTSCHRIFT

(11) **EP 1 741 888 B1**
(45) Veröffentlichungstag und Bekanntmachung des Hinweises auf die Patenterteilung: **23.04.2008**
(21) Anmeldenummer: 06013194.3
(22) Anmeldetag: 27.06.2006
(51) Int. Cl.: F01N 3/20

(54) **Vorratsbehälter eines Kraftfahrzeugs**
Storage tank of a motor vehicle
Réservoir d'un véhicule automobile

(30) Priorität: 06.07.2005 DE 102005031510
(43) Veröffentlichungstag der Anmeldung: 10.01.2007
(73) Patentinhaber: Daimler AG, 70327 Stuttgart (DE)
(72) Erfinder: Kerres, Wilhelm, Dr. Ing., 70327 Stuttgart (DE)

(56) Entgegenhaltungen:
- WO-A-20/05054638
- DE-A1- 10 308 257
- DE-A1- 10 319 151
- JP-A- 2000 027 627
- US-A- 6 063 350

## Beschreibung

Die Erfindung betrifft einen Vorratsbehälter eines Kraftfahrzeugs zur Bevorratung einer Flüssigkeit nach dem Oberbegriff des Anspruchs 1.

Es ist bekannt, für Vorratsbehälter von Kraftfahrzeugen, insbesondere für solche, bei denen die Bevorratung einer einfriergefährdeten Flüssigkeit vorgesehen ist, eine Beheizung vorzusehen. Die Dokumente DE 199 35 920 A1 und WO 2005/054638 A1 offenbaren jeweils einen Vorratsbehälter für wässerige Harnstofflösung, in dessen Innerem ein Heizelement angeordnet ist, welches an den Kühlkreislauf des Kraftfahrzeugs angeschlossen ist. Abwärme der Kraftfahrzeug-Brennkraftmaschine kann auf diese Weise auf die Harnstofflösung übertragen werden und zumindest bei laufendem Betrieb des Kraftfahrzeugs ein Einfrieren der Harnstofflösung im Behälter verhindert oder deren Auftauen erreicht werden.

Für denselben Zweck wird in der DE 103 19 151 A1 vorgeschlagen, eine Heizung in die Behälterwand zu integrieren. Auf diese Weise wird vermieden, dass ins Behälterinnere Heizungsteile hineinragen.

JP 2000 027627 A offenbart einen Flüssigkeitsvorratsbehälter eines Kraftfahrzeugs mit einer an den Behälter angeschlossenen Versorgungsleitung für die Flüssigkeit. Mittels eines elektrischen Heizdrahts können ein Großteil des Behälters sowie die daran angeschlossene Versorgungsleitung direkt beheizt werden. Dadurch kann ein Einfrieren der Flüssigkeit im Behälter bzw. in der Leitung verhindert werden.

Aufgabe der Erfindung ist es, einen weiter verbesserten Einfrierschutz für ein Flüssigkeitssystem eines Kraftfahrzeugs anzugeben.

Diese Aufgabe wird durch einen Vorratsbehälter mit den Merkmalen des Anspruchs 1 gelöst. Für den erfindungsgemäßen Vorratsbehälter ist charakteristisch, dass für die Anschlussstücke, die zum Anschluss einer Zulaufleitung bzw. einer Ablaufleitung in einen Anschlussbereich des Behälters eingesetzt sind, Mittel zur Beheizung vorgesehen sind. Dadurch wird der Erkenntnis Rechnung getragen, dass gerade für die Anschlussstücke selbst eine erhöhte Gefahr des Einfrierens besteht. Am Vorratsbehälter angebrachte Anschlussstücke werden von einer gegebenenfalls im Behälter angeordneten Heizung nur unzureichend erwärmt. Gleiches gilt für eine für die Leitungen vorgesehene Beheizung. Durch eine Beheizung des Vorratsbehälters bzw. des Leitungssystems kann daher kein zuverlässiger Frostschutz erreicht werden. Die vorzugsweise aus Metall gefertigten Anschlussstücke wirken als Wärmesenke und werden aufgrund ihrer vergleichsweise großen Wärmekapazität über Konvektion nur langsam erwärmt, so dass in den Anschlusstücken vorhandene eingefrorene Flüssigkeit nur langsam auftaut und über lange Zeit den Flüssigkeitstransport blockiert, auch wenn in den Leitungen und im Behälter die Flüssigkeit bereits aufgetaut ist. Durch die erfindungsgemäße Beheizung der Anschlussstücke wird dies vermieden, so dass die Flüssigkeit dort vor einem Einfrieren geschützt ist, bzw. nach einem Einfrieren rasch wieder auftaut und daher rasch zur Verfügung steht.

Erfindungsgemäß ist ferner für die Anschlussstücke ein wärmeleitender Kontakt mit einem beheizbaren Wärmetauschermittel vorgesehen. Die Beheizung der Anschlussstücke erfolgt dabei gleichsam indirekt durch Wärmeleitung. Über das Wärmetauschermittel wird an einer entfernten Stelle eingebrachte Wärme zu den Anschlussstücken geleitet, wodurch die konstruktiven Gestaltungsmöglichkeiten verbessert sind. Als Wärmetauschermittel kann ein beliebiger, hierfür geeigneter Wärmetauscher eingesetzt werden. Vorzugsweise umfasst das Wärmetauschermittel einen metallischen Formkörper.

Obschon die erfindungsgemäße Beheizung der Anschlussstücke für beliebige Flüssigkeitsvorratsbehälter, wie beispielsweise einen Kraftstofftank vorgesehen sein kann, ist es bevorzugt, dass der Behälter zur Bevorratung eines einfriergefährdeten Reduktionsmittels zur Abgasnachbehandlung, insbesondere von wässeriger Harnstofflösung eingesetzt wird. Die Anschlussstücke sind vorzugsweise als übliche Durchführungen ausgebildet. Bevorzugt sind Fittings in der Art von Schottverschraubungen oder Steckkupplungen.

In Ausgestaltung der Erfindung ist für die Anschlussstücke eine elektrische Beheizung vorgesehen. Diese kann beispielsweise als ein um die Anschlussstücke gewickelte Heizleitung oder als eine elektrisch beheizte Kappe ausgebildet sein. Vorzugsweise ist diese lediglich im Außenbereich des Behälters vorgesehen, wodurch eine Durchführung von elektrischen Leitungen durch die Behälterwand vermieden wird.

In weiterer Ausgestaltung der Erfindung ist für die Anschlussstücke eine Beheizung durch ein Kühlmittel des Kraftfahrzeugs vorgesehen. Hierfür können die Anschlussstücke beispielsweise einen Kühlmittelkanal aufweisen oder von einer Kühlmittelleitung umgeben sein.

In weiterer Ausgestaltung der Erfindung ist das Wärmetauschermittel im Anschlussbereich der Behälterwand angeordnet und im Wesentlichen als Flachmaterial ausgebildet. Besonders vorteilhaft ist es, wenn in weiterer Ausgestaltung der Erfindung das Wärmetauschermittel außen oder innen an der Behälterwand angeordnet ist oder in die Behälterwand eingelegt ist. Im Falle eines bevorzugt metallisch ausgebildeten Flachmaterials ist es vorteilhaft, die Anschlussstücke fest mit diesem zu verbinden. Das Wärmetauschermittel kann so auf die Anschlussstücke ausgeübte Kräfte aufnehmen, wodurch die Behälterwand entlastet ist.

In weiterer Ausgestaltung der Erfindung ist an dem Wärmetauschermittel ein Kühlmittelanschlussstück für eine im Behälterinneren angeordnete Kühlmittelbeheizung der Flüssigkeit befestigt. Die Anschlussstücke stehen somit über das Wärmetauschermittel mit dem Kühlmittelanschlussstück in wärmeleitender Verbindung. Mit dieser Ausführungsform können zwei Vorteile zugleich erreicht werden. Einerseits kann durch die Kühlmittelbeheizung die im Behälter bevorrateten Flüssigkeit erwärmt werden, wodurch sie frostgeschützt ist, bzw. rasch aufgetaut werden kann. Andererseits wird über das Kühlmittelanschlussstück und das Wärmetauschermittel vom Kühlmittel herantransportierte Wärme auf einfache Weise auf die Anschlussstücke übertragen, so dass sich die Anschlussstücke rasch erwärmen.

In weiterer Ausgestaltung der Erfindung weist ein Anschlussstück einen stiftförmigen Abschnitt auf, der sich bei an das Anschlussstück angeschlossener Flüssigkeitsleitung ins Innere der Flüssigkeitsleitung erstreckt. Auf diese Weise kann Wärme ins Leitungsinnere übertragen werden, wodurch einer erhöhten Wärmeabfuhr durch eine Steck- oder Schraubverbindung der Flüssigkeitsleitung mit dem Anschlussstück im Leitungsbereich dieser Verbindung begegnet wird.

In weiterer Ausgestaltung der Erfindung ist der Vorratsbehälter als Kunststoffbehälter ausgebildet. Im Vergleich zu einem Metallbehälter ist dadurch die Wärmeabfuhr aus dem Behälter vermindert und es ergeben sich Kostenvorteile bei Material und Fertigung.

Weitere Merkmale und Vorteile der vorliegenden Erfindung ergeben sich aus der nachfolgenden Beschreibung bevorzugter Ausführungsbeispiele. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Nachfolgend wird die Erfindung anhand von Zeichnungen und zugehörigen Beispielen näher erläutert.

Dabei zeigen:
- Fig. 1: eine Außenansicht einer vorteilhaften Ausführungsform des erfindungsgemäßen Vorratsbehälters,
- Fig. 2: eine Innenansicht eines Teils des Vorratsbehälters gemäß Fig. 1 und
- Fig. 3: eine vorteilhafte Ausführungsform für eine Beheizung der Anschlussstücke eines erfindungsgemäßen Vorratsbehälters.

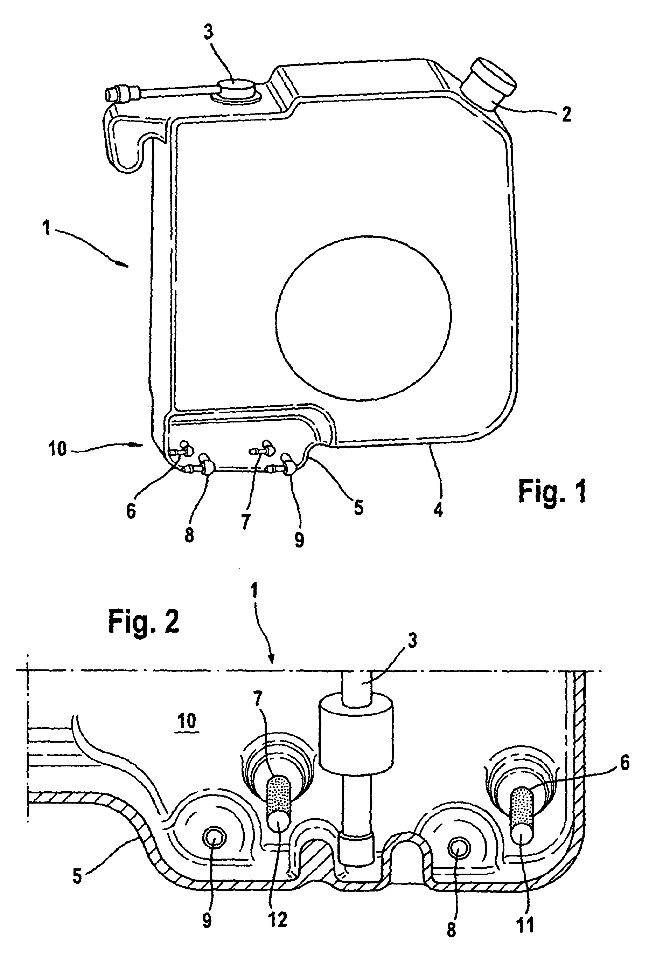

Nachfolgend wird unter Bezug auf die Figuren 1 und 2 eine vorteilhafte Ausführungsform des erfindungsgemäßen Vorratsbehälters beschrieben, der zur Bevorratung von Flüssigkeiten in Kraftfahrzeugen geeignet ist. Dabei zeigt Fig. 1 eine Außenansicht des Vorratsbehälters 1, während in Fig. 2 zur weiteren Verdeutlichung ausschnittsweise eine Innenansicht des Vorratsbehälters 1 dargestellt ist.

Der erfindungsgemäße Vorratsbehälter 1 dient bevorzugt der Bevorratung von wässeriger Harnstofflösung, die für die Stickoxidreduktion in einem nicht dargestellten Abgasreinigungssystem einer Brennkraftmaschine eingesetzt wird. Der Vorratsbehälter 1 weist an seiner Oberseite einen verschließbaren Einfüllstutzen 2 sowie eine Öffnung zur Einbringung einer Füllstandsmesseinrichtung 3 auf. Der Boden 4 des Vorratsbehälters 1 weist einen stufenförmigen Absatz 5 auf, dessen unterer Seitenwandbereich als Anschlussbereich 10 für Anschlussstücke 6, 7 für eine Zulaufleitung und eine Ablaufleitung (nicht dargestellt) der Harnstofflösung sowie für Kühlmittelanschlussstücke 8, 9 dient.

Die Kühlmittelanschlussstücke 8, 9 für den Anschluss einer nicht dargestellten Kühlmittelleitung sind vorzugsweise etwas unterhalb, seitlich versetzt und vorzugsweise nahe den Anschlussstücken 6, 7 im unteren Anschlussbereich 10 angebracht. Diese Anordnung gewährleistet einen ausreichenden Spielraum bei einer Montage der Leitungen.

Behälterinnenseitig sind an die Anschlussstücke 6, 7 Siebteile 11, 12 zur Ausfilterung von Schwebstoffteilchen aus der Harnstofflösung angebracht. An die Kühlmittelanschlussstücke 8, 9 ist eine nicht dargestellte Heizschlange angebracht, die vom Kühlmittel der Brennkraftmaschine durchströmt werden kann. Vorzugsweise ist die Heizschlange nahe des Behälterbodens 4 angeordnet. Auf diese Weise ist eine effektive Erwärmung der im Vorratsbehälter 1 befindlichen Harnstofflösung ermöglicht.

Die Anschlussstücke 6, 7 für die Harnstoffleitungen sowie die Kühlmittelanschlussstücke 8, 9 können als herkömmliche Durchführungen in der Art von Schottverschraubungen ausgebildet sein. Vorzugsweise sind für die Anschlüsse der entsprechenden Leitungen Steckkupplungsverbindungen vorgesehen. Der Vorratsbehälter 1 ist vorzugsweise aus einem Kunststoffmaterial gefertigt.

Bei entsprechend niedrigen Außentemperaturen neigen die vorzugsweise aus Metall gefertigten Anschlussstücke 6, 7 zu einem raschen Auskühlen, was zum Einfrieren von darin befindlicher Harnstofflösung führen kann. Da die Anschlussstücke 6, 7 zur Erzielung einer mechanischen Festigkeit vorzugsweise vergleichsweise massiv ausgeführt sind, erwärmen sie sich über Wärmeleitung ausgehend von der vorzugsweise jeweils beheizten Zulaufleitung bzw. Ablaufleitung nur relativ langsam. Auch der Wärmefluss ausgehend von der im Behälterinneren befindlichen Harnstofflösung ist für eine rasche Erwärmung der Anschlussstücke 6, 7 unzureichend. Es kann daher der Fall eintreten, dass obschon im Leitungssystem sowie im Vorratsbehälter 1 flüssige Harnstofflösung vorhanden ist, der Transport durch gefrorene Harnstofflösung in den Anschlussstücke 6, 7 verhindert oder behindert ist. Dies ist naturgemäß nachteilig, da das Abgasreinigungssystem in diesem Fall nicht ordnungsgemäß betrieben werden kann.

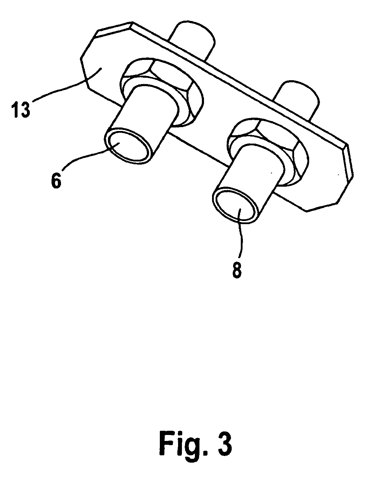

Erfindungsgemäß ist deshalb für die Anschlussstücke 6, 7 eine Beheizung vorgesehen. Diese kann als vorzugsweise behälteraußenseitig um die Anschlussstücke 6, 7 gewickelte Heizleitung ausgebildet sein. Ebenfalls vorteilhaft ist es, für die Anschlussstücke eine Verschraubung mit der Behälterwand mit einer elektrisch beheizbaren Unterlegscheibe vorzusehen. Dabei ist es vorteilhaft, die Unterlegscheibe gegenüber der Behälterwand zu isolieren. Die Anschlussstücke können jedoch auch mit einem Mantel versehen sein, der vom Kühlmittel der Brennkraftmaschine durchströmt werden kann. Ebenfalls möglich ist es, für die Anschlussstücke 6, 7 einen beheizbaren Mantel etwa in der Form einer Kappe oder Haube vorzusehen. Vorzugsweise ist für die Anschlussstücke 6, 7 als Beheizung jedoch eine wärmeleitende Verbindung mit den Kühlmittelanschlussstücken 8, 9 vorgesehen. Da die Kühlmittelanschlussstücke 8,9 infolge des sie durchströmenden erwärmten Kühlmittels rasch erwärmt werden können, steht auf diese Weise in kurzer Zeit ausreichend Wärme zur Aufwärmung der Anschlussstücke 6, 7 zur Verfügung. Zur Übertragung der von den Kühlmittelanschlussstücken 8, 9 auf die Anschlussstücke 6, 7 ist vorzugsweise ein Wärmetauschermittel vorgesehen. In einer besonders bevorzugten Ausführungsform ist hierfür eine Metallplatte vorgesehen, an welcher sowohl jeweils einer der Kühlmittelanschlussstücke 8, 9 als auch einer der Anschlussstücke 6, 7 befestigt ist. In Fig. 3 ist ein Beispiel einer solchen Ausführungsform schematisch dargestellt.

Fig. 3 zeigt eine Metallplatte 13, in die beispielsweise das Anschlussstück 6 für den Anschluss der Harnstoffzulaufleitung sowie der Kühlmittelanschluss 8 für das Kühlmittel eng benachbart zueinander eingeschraubt sind. Die Anschlussstücke 6, 7 und die Kühlmittelanschlussstücke 8, 9 sind bevorzugt als Einschraubstutzen ausgeführt. Vorzugsweise sind je eines der Anschlussstücke 6, 7 und der Kühlmittelanschlussstücke 8, 9 paarweise einer Metallplatte 13 zugeordnet. Die Metallplatte 13 wirkt als Wärmetauscher in Bezug auf eine Wärmeübertragung vom Kühlmittelanschlussstück 8 auf das Anschlussstück 6. Für eine möglichst wirksame Wärmeübertragung ist eine vergleichsweise große Auflage- oder Kontaktfläche der jeweiligen Einschraubstutzen vorteilhaft, was etwa mittels einer vergleichsweise groß ausgeführten Unterlegscheibe erreicht werden kann.

Die als Wärmetauscher fungierende Metallplatte 13 kann außen oder innen anliegend im Anschlussbereich 10 des Vorratsbehälters 1 angeordnet sein. Besonders bevorzugt ist jedoch, die Metallplatte als in das Kunststoffmaterial des Vorratsbehälters 1 eingesintertes bzw. eingebettetes Einlegeteil auszuführen. Durch die Umhüllung mit dem Kunststoffmaterial wird eine Wärmeisolation erreicht und die Wärmeabfuhr nach außen vermindert. Die auf diese Weise erzielte feste Verbindung der Metallplatte 13 mit der Behälterwand hat den weiteren Vorteil, bei einer Montage der Einschraubstutzen vergleichsweise große Kräfte aufgenommen werden können, so dass die Gefahr einer Beschädigung des Behälters stark vermindert ist.

Eine weitere nicht näher dargestellte Verbesserung kann erreicht werden, wenn die Anschlussstücke 6, 7 einen sich nach außen in Richtung der anzuschließenden Zulauf- oder Ablaufleitung erstreckenden Stift aufweisen, der mit dem jeweiligen Anschlussstück, 6, 7 in wärmeleitender Verbindung steht. Bei montierter Leitung ragt dieser Stift ein Stück weit in die Leitung hinein. Auf diese Weise kann im Bereich der Verbindung von Leitung und Anschlussstück 6, 7 eine wirksame Erwärmung erfolgen. Der Stift kann durch Wärmeleitung ausgehend vom erwärmten Kühlwasseranschluss oder durch eine elektrische Heizung beheizt sein.

## Patentansprüche

1. Vorratsbehälter (1) eines Kraftfahrzeugs zur Bevorratung einer Flüssigkeit, mit in einem Anschlussbereich (10) der Behälterwand eingesetzten Anschlussstücken (6, 7) für eine Zulaufleitung und eine Ablaufleitung für die Flüssigkeit,
**dadurch gekennzeichnet, dass**
Mittel zur Beheizung der Anschlussstücke (6, 7) vorgesehen sind, die ein beheizbares Wärmetauschermittel umfassen, welches in wärmeleitendem Kontakt mit den Anschlussstücken (6, 7) steht.

2. Vorratsbehälter (1) nach Anspruch 1,
**dadurch gekennzeichnet, dass**
für die Anschlussstücke (6, 7) eine elektrische Beheizung vorgesehen ist.

3. Vorratsbehälter (1) nach Anspruch 1 oder 2,
**dadurch gekennzeichnet, dass**
für die Anschlussstücke (6, 7) eine Beheizung durch ein Kühlmittel des Kraftfahrzeugs vorgesehen ist.

4. Vorratsbehälter (1) nach einem der Ansprüche 1 bis 3,
**dadurch gekennzeichnet, dass**
das Wärmetauschermittel im Anschlussbereich (10) der Behälterwand angeordnet ist und im Wesentlichen als Flachmaterial ausgebildet ist.

5. Vorratsbehälter (1) nach einem der Ansprüche 1 bis 4,
**dadurch gekennzeichnet, dass**
das Wärmetauschermittel außen oder innen an der Behälterwand angeordnet ist oder in die Behälterwand eingelegt ist.

6. Vorratsbehälter (1) nach einem der Ansprüche 1 bis 5,
**dadurch gekennzeichnet, dass**
an dem Wärmetauschermittel ein Kühlmittelanschlussstück (8, 9) für eine im Behälterinneren angeordnete Kühlmittelbeheizung der Flüssigkeit befestigt ist.

7. Vorratsbehälter (1) nach einem der Ansprüche 1 bis 6,
**dadurch gekennzeichnet, dass**
ein Anschlussstück (6, 7) einen stiftförmigen Abschnitt aufweist, der sich bei an das Anschlussstück (6, 7) angeschlossener Flüssigkeitsleitung ins Innere der Flüssigkeitsleitung erstreckt.

8. Vorratsbehälter (1) nach einem der Ansprüche 1 bis 7,
**dadurch gekennzeichnet, dass**
der Vorratsbehälter (1) als Kunststoffbehälter ausgebildet ist.

## Claims

1. Storage tank (1) of a motor vehicle for the storage of a liquid, having connection elements (6, 7) inset into a connection area (10) of the tank wall for a liquid inlet pipe and a liquid outlet pipe,
**characterised in that**
means are provided for heating the connection elements (6, 7), which comprise heat exchange means that can be heated and are in heat-transferring contact with the connection elements (6, 7).

2. Storage tank (1) according to Claim 1,
**characterised in that**
electric heating is provided for the connection elements (6, 7).

3. Storage tank (1) according to Claims I or 2,
**characterised in that**
the connection elements (6, 7) are heated by a coolant of the motor vehicle.

4. Storage tank (1) according to any of Claims 1 to 3,
**characterised in that**
the heat exchange means are arranged in the connection area (10) of the tank wall and are essentially in the form of a flat material.

5. Storage tank (1) according to any of Claims 1 to 4,
**characterised in that**
the heat exchange means are arranged on the outside or inside of the tank wall, or are embedded in the tank wall.

6. Storage tank (1) according to any of Claims I to 5,
**characterised in that**
a coolant connection pipe (8, 9) is attached to the heat exchange means for heating the liquid by coolant, said means being arranged inside the tank.

7. Storage tank (I) according to any of Claims 1 to 6,
**characterised in that**
a connection element (6, 7) has a pin-shaped section which extends into the inside of the liquid pipeline when the latter is connected to the connection element (6, 7).

8. Storage tank (1) according to any of Claims 1 to 7,
**characterised in that**
the storage tank (1) is a plastic container.

## Revendications

1. Réservoir (1) d'un véhicule automobile pour le stockage de réserve d'un liquide, comprenant des pièces de raccord (6, 7) implantées dans une zone de raccordement (10) de la paroi de réservoir et destinées à une conduite d'écoulement d'entrée et une conduite d'écoulement de sortie pour le liquide,
**caractérisé en ce que** sont prévus des moyens pour le chauffage des pièces de raccord (6, 7) englobant un moyen d'échange de chaleur pouvant être chauffé, qui est en contact de conduction de chaleur avec les pièces de raccord (6, 7).

2. Réservoir (1) selon la revendication 1,
**caractérisé en ce que** pour les pièces de raccord (6, 7) est prévu un chauffage électrique.

3. Réservoir (1) selon la revendication 1 ou 2,
**caractérisé en ce que** pour les pièces de raccord (6, 7) est prévu un chauffage par un agent de refroidissement du véhicule automobile.

4. Réservoir (1) selon l'une des revendications 1 à 3,
**caractérisé en ce que** le moyen d'échange de chaleur est agencé dans la zone de raccordement (10) de la paroi de réservoir et est essentiellement réalisé sous forme de matériau plat.

5. Réservoir (1) selon l'une des revendications 1 à 4,
**caractérisé en ce que** le moyen d'échange de chaleur est agencé à l'extérieur ou à l'intérieur sur la paroi de réservoir, ou bien est inséré dans la paroi de réservoir.

6. Réservoir (1) selon l'une des revendications 1 à 5,
**caractérisé en ce que** sur le moyen d'échange de chaleur est fixée une pièce de raccord d'agent de refroidissement (8, 9) pour un système de chauffage du liquide par l'agent de refroidissement, qui est agencé à l'intérieur du réservoir.

7. Réservoir (1) selon l'une des revendications 1 à 6,
**caractérisé en ce qu'**une pièce de raccord (6, 7) présente un tronçon en forme de pointeau, qui, lorsque la conduite de liquide est raccordée à la pièce de raccord (6, 7), s'étend à l'intérieur de la conduite de liquide.

8. Réservoir (1) selon l'une des revendications 1 à 7,
**caractérisé en ce que** le réservoir (1) est réalisé sous forme de réservoir en matière plastique.
